Europäisches Patentamt

(19) European Patent Office

Office européen des brevets

(11) Numéro de publication: **0 167 746**
**B1**

(12) **FASCICULE DE BREVET EUROPEEN**

(45) Date de publication du fascicule du brevet: **03.10.90**

(51) Int. Cl.⁵: **H 01 S 3/038,** H 01 S 3/097

(21) Numéro de dépôt: **85105668.9**

(22) Date de dépôt: **09.05.85**

(54) Generateur laser a gaz.

(30) Priorité: **14.05.84 FR 8407416**

(43) Date de publication de la demande:
**15.01.86 Bulletin 86/03**

(45) Mention de la délivrance du brevet:
**03.10.90 Bulletin 90/40**

(84) Etats contractants désignés:
**BE DE FR GB**

(56) Documents cités:
**US-A-3 740 662**

**PATENTS ABSTRACTS OF JAPAN, volume 8, no. 4 (E-220)(1441), 10 janvier 1984, & JP - A - 58-169 986 (HITACHI SEISAKUSHO K.K.) 06-10-1983**

Le dossier contient des informations techniques présentées postérieurement au dépôt de la demande et ne figurant pas dans le présent fascicule.

(73) Titulaire: **SAT (Société Anonyme de Télécommunications)**
**6, avenue d'léna**
**F-75116 Paris (FR)**

(72) Inventeur: **Beaupere, Didier**
**4, Cité Joyeux**
**F-75017 Paris (FR)**
Inventeur: **Helias, Guy**
**Dilo**
**F-89230 Cerisiers (FR)**

(74) Mandataire: **Bloch, Gérard et al**
**2, square de l'Avenue du Bois**
**F-75116 Paris (FR)**

(56) Documents cités:

**JOURNAL OF PHYSICS E: SCIENTIFIC INSTRUMENTS, volume 13, no. 5, mai 180, pages 589-591, The Institute of Physics, Londres, GB; C.B. HATCH: "A compact, resistive-electrode HF laser suitale for optical studies of semiconductors"**

Courier Press, Leamington Spa, England.

(56) Documents cités:

**REVIEW OF SCIENTIFIC INSTRUMENTS, volume
53, no. 12, décembre 1982, pages 1861-1863,
New York, US; P. PACE et al.: "Miniature, sealed
TEA-CO2 lasers with integral semiconductive
preionization"**

**APPLIED PHYSICS LETTERS, volume 31, no. 3,
1er aou7t 1977, pages 176-178, American
Institute of Physics, New York, US; A.F. GIBSON
et al.: "A transversely excited multiatmosphere
CO2 waveguide laser"**

**REVIEW OF SCIENTIFIC INSTRUMENTS, volume
54, no. 6, juin 1983, pages 719-721, American
Institute of Physics, New York, US; H.
HOKAZONO et al.: "High-power, long-pulse CO2
laser transversely excited by a damped
oscillating discharge through dielectric
electrodes"**

**CRC Handbook of Chemistry and Physics, 59th
edition, 1978-1979, CRC Press, West Palm
Beach, page D-53**

## Description

La présente invention concerne un générateur laser à gaz selon le préambule de la revendication 1, du type comportant des moyens pour former une cavité optique résonnante suivant un axe, un gaz actif disposé dans la cavité, deux électrodes disposées en regard l'une de l'autre en contact avec le gaz actif, au moins une de ces électrodes étant constituée d'un matériau conducteur à grande résistivité, et un circuit d'alimentation électrique dont les deux sorties peuvent être connectées respectivement aux deux électrodes pour créér entre elles dans le gaz actif une décharge électrique apte à former un rayonnement laser oscillant dans la cavité, celle-ci comportant des moyens pour laisser sortie une partie de l'énergie du rayonnement oscillant afin de former un faisceau laser.

On connaît un générateur laser à gaz de ce type, décrit dans l'article américain "A transversely excited multiatmosphere $CO_2$ waveguide laser" (A. F. Gibson et al) extrait de la revue "Applied physics letters", vol. 31, n° 3, 1er août 1977, pages 176 à 178. Ce générateur laser, du genre guide d'onde, à gaz carbonique, comporte une cathode en silicium. Le gaz étant à la pression atmosphérique, une énergie spécifique de 5 Joules par litre de gaz actif utile a été mesurée.

Un laser TEA $CO_2$ comportant des électrodes principales en Al et, comme moyens de préionisation, des électrodes auxiliaires en SiC est décrit dans Review of Scientific Instruments, vol. 33, 1982, p. 1861—1863.

La présente invention a pour but d'augmenter les performances des générateurs laser à gaz connus. Elle a pour objet un générateur laser à gaz, du type mentionné plus haut, caractérisé en ce que ledit matériau conducteur à grande résistivité est le carbure de silicium.

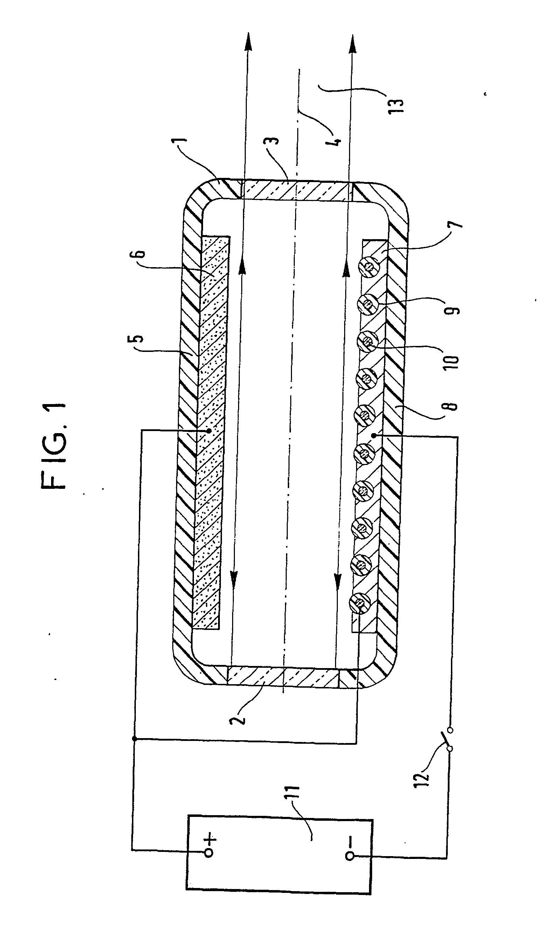

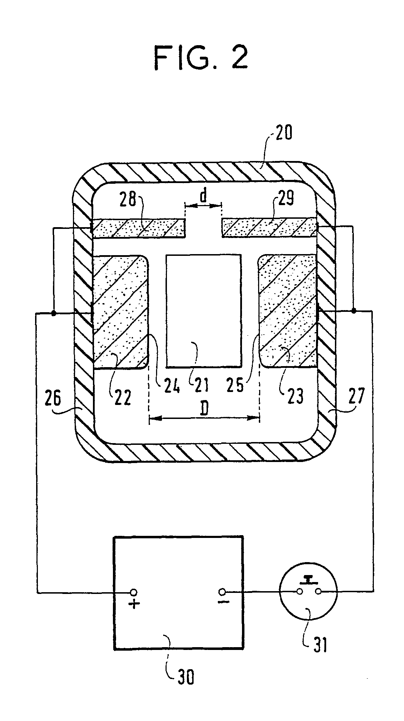

Des formes particulières d'exécution de l'objet de la présente invention sont décrites ci-dessous, à titre d'exemple, en référence au dessin annexé dans lequel la figure 1 représente schématiquement, en coupe longitudinale un mode de réalisation du générateur laser selon l'invention, et la figure 2 représente schématiquement, en coupe transversale, un autre mode de réalisation du générateur laser selon l'invention.

Sur la figure 1, est représentée une enceinte parallélépipédique isolante 1 contenant un gaz actif laser tel qu'un mélange de gaz carbonique, d'hélium et d'azote. Les parois de deux faces opposées de l'enceinte 1 comportent respectivement deux miroirs 2 et 3 qui forment dans l'enceinte 1 une cavité optique résonnante suivant un axe longitudinal 4 de cette enceinte. Le miroir 2 est totalement réfléchissant à un rayonnement de longueur d'onde 10,6 microns et le miroir 3 est partiellement transparent à ce rayonnement.

Sur la paroi interne d'une autre face 5 de l'enceinte 1, est disposée une électrode longitudinale 6, de forme parallélépipédique. Une autre électrode parallélédépipédique 7 en aluminium est disposée sur la paroi interne de la face 8 opposée à la face 5. Les électrodes 6 et 7 sont ainsi parallèles entre elles et à l'axe 4. Selon une disposition de l'invention, l'électrode 6 est constituée de carbure de silicium. L'électrode 6 peut être une céramique formée par frittage d'une poudre de carbure de silicium. Sur la face de l'électrode 7 en contact avec le gaz actif, sont ménagées des rainures 9 parallèles entre elles, dans lesquelles sont logés des conducteurs isolés 10. Les électrodes 6 et 7 sont reliées respectivement, par des connexions électriques traversant la paroi de l'enceinte, aux pôles positif et négatif d'une source d'alimentation électrique à haute tension 11, à travers un commutateur 12. La liaison électrique entre l'électrode 6 et le fil de connexion qui la relie à la source 11 peut être effectuée en déposant, par exemple au pinceau, sur cette électrode une mince couche d'or ou d'argent, l'extrémité du fil de connexion étant fixée sur cette couche par une brasure à l'or. Les conducteurs 10 sont reliés au pôle positif de la source 11.

Le fonctionnement du générateur laser décrit ci-dessus s'effectue de la manière suivante. En actionnant le commutateur 12, on forme une impulsion à haute tension qui polarise les électrodes 6 et 7, la cathode 7 étant portée à un potentiel négatif par rapport à l'anode 6. La différence de potentiel est choisie assez grande pour entraîner la formation d'une décharge électrique transversale dans le gaz actif, la présence des conducteurs 10 permettant de rendre cette décharge plus homogène. La décharge électrique crée dans le gaz actif un rayonnement de longueur d'onde 10,6 microns oscillant dans la cavité, une partie de ce rayonnement sortant de la cavité par le miroir 3 pour former un faisceau laser 13.

On constate que les performances des lasers à gaz du type de celui illustré par la figure 1 sont nettement augmentées par rapport à celles des lasers munis de deux électrodes conductrices usuelles (en aluminium par exemple), et même par rapport à celles des lasers comportant, selon l'art connu, une électrode en silicium. En particulier, la puissance spécifique des lasers à gaz à impulsions du type de celui illustré par la figure 1 est plus forte.

A titre indicatif, avec un laser à gaz, de volume actif 3,6 cm$^3$, muni d'une électrode en carbure de silicium et d'une électrode en aluminium, ce laser étant rempli d'un mélange de gaz carbonique et d'azote à la pression atmosphérique, et ce gaz étant soumis à une décharge électrique transversale de durée 100 ns et d'énergie spécifique 1,3 KJ par litre, on a mesuré une puissance laser spécifique de 370 MW par litre et une énergie laser spécifique de 24 Joules par litre. Ce laser étant rempli d'un mélange de gaz carbonique, d'azote et d'hélium, on a mesuré une énergie laser spécifique de 30 Joules par litre.

Sur la figure 2 est représentée une enceinte isolante parallélépipédique 20 contenant un gaz actif laser tel qu'un mélange de gaz carbonique, d'hélium et d'azote. Les parois de deux faces opposées de l'enceinte 20 comportent respectivement un miroir 21 et un autre miroir non visible sur la figure. Ces miroirs forment dans l'enceinte 20 une cavité optique résonnante suivant un axe de bout par rapport au plan de la figure.

Sur les parois internes de deux autres faces opposées 26 et 27 de l'enceinte 20 sont disposées respectivement deux électrodes principales 22 et 23 de forme parallélépipédique en contact avec le gaz actif. Ces électrodes présentent respectivement deux surfaces planes 24 et 25 parallèles entre elles et en regard l'une de l'autre. Les électrodes 22 et 23 sont constituées par du carbure de silicium: elles peuvent être réalisées sous forme de blocs de céramique par frittage d'une poudre de carbure de silicium.

De préférence, deux électrodes auxiliaires 28 et 29 opposées l'une à l'autre sont disposées en contact avec le gaz actif respectivement à côté des deux électrodes principales. Les électrodes auxiliaires, de section plus faible que celle des électrodes principales, sont constituées par un carbure de silicium dont la résistivité est supérieure à celle du carbure de silicium des électrodes principales. La distance d entre les électrodes auxiliaires est inférieure à la distance D entre les électrodes principales. Les électrodes 28 et 22 sont reliées au pôle positif d'un générateur à haute tension 30 par des connexions électriques traversant le face 26 de l'enceinte 20. Les électrodes 23 et 29 sont reliées au pôle négatif du générateur 30 à travers un interrupteur 31 par des connexions électriques traversant la face 27 de l'enceinte 20.

La liaison électrique entre chaque électrode et le fil de connexion peut être effectuée en déposant au pinceau sur l'électrode une mince couche d'or ou d'argent, l'extrémité du fil de connexion étant fixée sur cette couche par une brasure à l'or.

Le fonctionnement du générateur laser illustré par le figure 2 s'effectue de la manière suivante. En fermant l'interrupteur 31, on porte les électrodes 22 et 28 à un potentiel positif élevé par rapport respectivement aux électrodes 23 et 29. Une décharge électrique jaillit d'abord entre les électrodes auxiliaires 28 et 29. Cette décharge produit une ionisation de l'espace compris entre les électrodes principales, cette ionisation provoquant le déclenchement de la décharge électrique principale entre les électrodes 22 et 23. La décharge principale crée dans le gaz actif un rayonnement, de longueur d'onde 10,6 microns, oscillant dans la cavité. Un des miroirs de la cavité est partiellement transparent pour laisser sortir une partie du rayonnement oscillant, afin de former un faisceau laser.

La préionisation du gaz actif laser présente l'avantage de faciliter le déclenchement de la décharge principale. Bien entendu, la préionisation, qui s'effectue dans l'exemple décrit à l'aide de deux électrodes auxiliaires en carbure de silicium, peut être réalisée par d'autres moyens connus, à l'aide de rampes à arc ou d'un générateur de rayonnement ultraviolet par exemple.

On constate que la décharge électrique principale des lasers du type de celui illustré par la figure 2 est particulièrement dense et homogène. En particulier, il n'est pas nécessaire de réaliser des rainures dans une des électrodes pour y loger des conducteurs isolés reliés à l'autre électrode afin d'augmenter l'homogénéité de la décharge, comme il est conseillé de le faire dans le générateur laser illustré par le figure 1. Le générateur illustré par la figure 2 est donc, à performances égales, plus simple et plus facile à réaliser que le générateur laser illustré par la figure 1.

De plus la fiabilité das lasers du type de celui illustré par la figure 2 est nettement augmentée; en effet les deux électrodes réalisées en carbure de silicium sont très résistantes aux arrachements de matière par les décharges électriques.

A titre indicatif la résistivité du carbure de silicium constituant les électrodes principales peut être de quelques dizaines d'ohms x cm en régime de décharge, alors que le carbure de silicium constituant les électrodes auxiliaires a une résistivité de quelques milliers d'ohms x cm.

## Revendications

1. Générateur laser à gaz, comportant:
   une cavité optique résonnante, apte à faire osciller un rayonnement et à en laisser sortir une partie pour former un faisceau laser,
   un gaz actif laser dans cette cavité,
   deux électrodes principales s'étendant en regard l'une de l'autre sur deux faces latérales opposées de cette cavité, au moins une de ces électrodes étant constituée d'un matériau d'homogénéisation de décharge présentant une résistivité suffisamment grande et homogène pour uniformiser entre ces deux électrodes, sur toute l'étendue de celles-ci, une décharge électrique principale transversale apte à exciter ledit gaz actif de manière à lui faire engendrer ledit rayonnement,
   et un circuit d'alimentation électrique connecté entre ces deux électrodes principales pour créer ladite décharge électrique principale,
   ce générateur étant caractérisé en ce que ledit matériau d'homogénéisation de décharge est un carbure de silicium.

2. Générateur laser selon la revendication 1, caractérisé en ce que ledit circuit d'alimentation (11, 12) fonctionne par impulsions.

3. Générateur laser selon la revendication 1, caractérisé en ce que le gaz actif laser est un mélange de gaz carbonique, d'hélium et d'azote à la pression atmosphérique.

4. Générateur laser selon la revendication 1, caractérisé en ce que l'électrode principale en carbure de silicium est l'anode (6).

5. Générateur laser selon la revendication 4, caractérisé en ce que la cathode (7) comporte des rainures (9) dans lesquelles sont logés des conducteurs isolés (10) reliés électriquement à l'anode (6).

6. Générateur laser selon la revendication 1, caractérisé en ce que les deux électrodes principales (22, 23) sont constituées par du carbure de silicium.

7. Générateur laser selon la revendication 6, caractérisé en ce que les deux électrodes principales (22, 23) comportent respectivement deux surfaces (24, 25) planes parallèles entre elles et en regard l'une de l'autre.

8. Générateur laser selon la revendication 6, caractérisé en ce qu'il comporte en outre des moyens de préionisation (28, 29) du gaz actif laser.

9. Générateur laser selon la revendication 8, caractérisé en ce que lesdits moyens de préionisation sont des électrodes auxiliaires (28, 29) en carbure de silicium, ces électrodes auxiliaires étant disposées en regard l'une de l'autre en contact avec le gaz actif à proximité des électrodes principales (22, 23), la distance (d) entre les électrodes auxiliaires (28, 29) étant plus faible que celle (D) entre les électrodes principales (22, 23), le carbure de silicium constituant les électrodes auxiliaires ayant une résistivité plus élevée que celle du carbure de silicium constituant les électrodes principales, les deux électrodes auxiliaires (28, 29) étant électriquement reliées respectivement aux deux électrodes principales (22, 23).

**Patentansprüche**

1. Gas-Lasergenerator, bestehend aus
einem optischen Hohlraumresonator, welcher geeignet ist, eine Strahlung in Schwingungen zu versetzen und einen Teil davon austreten zu lassen, um einen Laserstrahl zu bilden,
einem aktiven Lasergas in diesem Hohlraum,
zwei Hauptelektroden, welche auf zwei gegenüberliegenden Seitenflächen dieses Hohlraums einander gegenüber angeordnet sind, wobei zumindest eine dieser Elektroden aus einem Entladungshomogenisierungsmaterial besteht, welches eine ausreichend große und homogene Resistivität aufweist, um zwischen diesen beiden Elektroden, über deren ganze Fläche, eine elektrische Hauptentladung in Querrichtung zu uniformieren, durch welche das genannte aktive Gas erregt wird, sodaß von diesem die genannte Strahlung erzeugt wird,
und einem Speisestromkreis, welcher zwischen die beiden Hauptelektroden geschaltet ist, um die genannte elektrische Hauptentladung hervorzurufen,
wobei dieser Generator dadurch gekennzeichnet ist, daß das genannte Entladungshomogenisierungsmaterial ein Siliziumkarbid ist.

2. Lasergenerator gemäß Anspruch 1, dadurch gekennzeichnet, daß der genannte Speisestromkreis (11, 12) im Pulsbetrieb arbeitet.

3. Lasergenerator gemäß Anspruch 1, dadurch gekennzeichnet, daß das aktive Lasergas eine Mischung aus Kohlendioxid, Helium und Stickstoff, unter Luftdruck, ist.

4. Lasergenerator gemäß Anspruch 1, dadurch gekennzeichnet, daß die Hauptelektrode aus Siliziumkarbid die Anode (6) ist.

5. Lasergenerator gemäß Anspruch 4, dadurch gekennzeichnet, daß die Kathode (7) Nuten (9) aufweist, in welchen mit der Anode (6) elektrisch verbundene isolierte Leiter (10) liegen.

6. Lasergenerator gemäß Anspruch 1, dadurch gekennzeichnet, daß die beiden Hauptelektroden (22, 23) aus Siliziumkarbid bestehen.

7. Lasergenerator gemäß Anspruch 6, dadurch gekennzeichnet, daß die beiden Hauptelektroden (22, 23) zwei ebene, zueinander parallele und einander gegenüberliegende Flächen (24, 25) aufweisen.

8. Lasergenerator gemäß Anspruch 6, dadurch gekennzeichnet, daß er des weiteren Mittel zum Vorionisieren (28, 29) des aktiven Lasergases aufweist.

9. Lasergenerator gemäß Anspruch 8, dadurch gekennzeichnet, daß die genannten Mittel zum Vorionisieren Hilfselektroden (28, 29) aus Siliziumkarbid sind, wobei diese Hilfselektroden in Kontakt mit dem aktiven Gas einander gegenüber in der Nähe der Hauptelektroden (22, 23) angeordnet sind, wobei der Abstand (d) zwischen den Hilfselektroden (28, 29) geringer ist als derjenige (D) zwischen den Hauptelektroden (22, 23), wobei das Siliziumkarbid, aus welchem die Hilfselektroden bestehen, eine höhere Resistivität aufweist als das Siliziumkarbid, aus welchem die Hauptelektroden bestehen, wobei die beiden Hilfselektroden (28, 29) mit den beiden Hauptelektroden (22, 23) elektrisch verbunden sind.

**Claims**

1. Gas laser generator comprising:
a resonant optical cavity, suited for causing a radiation to oscillate and for allowing a portion thereof to escape in order to form a laser beam,
a laser active gas disposed in that cavity,
two main electrodes disposed facing each other on two opposite lateral faces of that cavity, at least one of said electrodes being constituted by a discharge homogenizing material, exhibiting a resistivity which is high and homogeneous enough to make uniform, between these two electrodes, on the whole surface thereof, a transversal main electric discharge adapted for exciting said active gas in order to make it generate said radiation,
and an electrical supply circuit connected to these main electrodes respectively in order to create said main electric discharge,
this generator being characterized in that said discharge homogenizing material is silicon carbide.

2. Laser generator according to claim 1, characterized in that the said supply circuit (11, 12) operates by pulses.

3. Laser generator according to claim 1, characterized in that the laser active gas is a mixture of carbon dioxide gas, helium and nitrogen at atmosphereic pressure.

4. Laser generator according to claim 1, characterized in that the silicon carbide main electrode is the anode (6).

5. Laser generator according to claim 4, characterized in that the cathode (7) includes grooves (9) in which insulated conductors (10) are housed, said conductors being electrically connected to the anode (6).

6. Laser generator according to claim 1, characterized in that both main electrodes (22, 23) are made of silicon carbide.

7. Laser generator according to claim 6, characterized in that the two main electrodes (22, 23) include two respective plane parallel surfaces (24, 25) which are opposite each other.

8. Laser generator according to claim 6, characterized in that it further includes means (28, 29) for pre-ionizing the laser active gas.

9. Laser generator according to claim 8, characterized in that the said pre-ionization means are auxiliary electrodes (28, 29) made of silicon carbide, these auxiliary electrodes being disposed opposite each other and in contact with the active gas in the vicinity of the main electrodes (22, 23), the distance (d) between the auxiliary electrodes (28, 29) being less than the distance (D) between the main electrodes (22, 23), the silicon carbide constituting the auxiliary electrodes being of higher resistivity than the silicon carbide constituting the main electrodes, the two auxiiliary electrodes (28, 29) being electrically connected to respective ones of the two main electrodes (22, 23).

# FIG. 1

EP 0 167 746 B1

# FIG. 2